(19) Europäisches Patentamt / European Patent Office / Office européen des brevets

(11) **EP 4 632 866 A1**

(12) **EUROPEAN PATENT APPLICATION**
published in accordance with Art. 153(4) EPC

(43) Date of publication:
**15.10.2025 Bulletin 2025/42**

(21) Application number: **24894603.0**

(22) Date of filing: **20.11.2024**

(51) International Patent Classification (IPC):
**H01M 10/0585** (2010.01)  **H01M 4/04** (2006.01)
**H01M 10/04** (2006.01)  **H01M 10/42** (2006.01)

(52) Cooperative Patent Classification (CPC):
**H01M 4/04; H01M 10/04; H01M 10/0585;
H01M 10/42;** Y02E 60/10; Y02P 70/50

(86) International application number:
**PCT/KR2024/018391**

(87) International publication number:
**WO 2025/110711 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.11.2023 KR 20230160436**

(71) Applicant: **LG Energy Solution, Ltd.
Seoul 07335 (KR)**

(72) Inventors:
• **SEONG, Eun Kyu**
  **Daejeon 34122 (KR)**
• **KIM, Ji Hyun**
  **Daejeon 34122 (KR)**
• **LIM, Soo Hyun**
  **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **METHOD FOR DEACTIVATING OUTERMOST NEGATIVE ELECTRODES, METHOD FOR MANUFACTURING ELECTRODE ASSEMBLY, AND ELECTRODE ASSEMBLY**

(57)     The present invention provides a deactivation method of a pair of outermost shell negative electrodes, each of which is disposed at the uppermost end and the lowermost end of an electrode assembly including a plurality of positive electrodes, a plurality of negative electrodes, and a plurality of separators, wherein the deactivation method of outermost shell negative electrodes comprises a deactivation step of forming a deactivation region having a predetermined width (w) along an edge of one side of the outermost shell negative electrode, and in the deactivation step, the width (w) is determined based on the horizontal length of the outermost shell negative electrode, the vertical length of the outermost shell negative electrode, and the number of mono cells composed of the separator, the negative electrode, the separator, and the positive electrode in the electrode assembly, whereby it is possible to provide a clear guide for a deactivation operation of the outermost shell negative electrode of the electrode assembly.

[Figure 1]

## Description

## Technical Field

The present invention relates to a method for deactivating an outermost shell negative electrode, a method for manufacturing an electrode assembly, and an electrode assembly manufactured by the method.

## Background Art

As technological developments and demands for mobile devices increase, the demands for secondary batteries as an energy source rapidly increase, and among such secondary batteries, lithium secondary batteries are commercialized and widely used, which exhibit high energy densities and operating potentials, and have long cycle lives and low selfdischarge rates.

In addition, as interests of environmental issues increases, much research on electric vehicles and hybrid electric vehicles that can replace vehicles using fossil fuels, such as gasoline vehicles and diesel vehicles, which are one of main causes of air pollution, has been conducted. Nickel-metal hydride secondary batteries are mainly used as power sources for such electric vehicles and hybrid electric vehicles, but research using lithium secondary batteries with high energy densities and discharge voltages has been actively conducted, and some have been commercialized.

The secondary batteries are classified depending on which structure an electrode assembly with a structure of positive electrode/separator/negative electrode has, and representatively, divided into a jelly-roll (rolled) electrode assembly in which long sheetshaped positive and negative electrodes are rolled up in a state where a separator is interposed therebetween, a stacked (laminated) electrode assembly in which a number of positive and negative electrodes cut into units with a predetermined size are sequentially laminated in a state where a separator is interposed therebetween, and a stacked/folded electrode assembly in which the rolled and laminated types are combined.

Such a secondary battery is generally manufactured by embedding an electrode assembly consisting of positive electrode and negative electrode plates, in which positive electrode and negative electrode active materials are coated, and a separator interposed therebetween in a pouch-type case made of an aluminum laminate sheet.

The secondary battery thus manufactured performs an activation process for charging and discharging.

Upon the activation process, lithium moves between the remaining electrodes, separator, and electrolyte, except for a pair of outermost shell negative electrodes located at the uppermost end and the lowermost end of the electrode assembly, respectively, and a charging and discharging reaction (hereinafter referred to as a main reaction) occurs.

Meanwhile, in the outermost shell negative electrode, a local reaction occurs, which involves the charging and discharging of adjacent electrodes without participating in the main reaction.

For example, the outermost shell negative electrode is charged while lithium is introduced by diffusion through the electrolyte, where potential differences occur at the edges and middle portion of the outermost shell negative electrode, thereby causing a side reaction.

If the local reaction accounted for a certain ratio or more relative to the main reaction, there was a problem of unnecessary electrolyte consumption and unevenness of the entire electrode assembly.

Previously, to prevent the outermost shell negative electrode from participating in the local reaction, a deactivation operation of coating the surface or edge of the outermost shell negative electrode with an insulating material was performed.

The deactivation operation can reduce side reactions due to potential differences by making the potential differences between the edges and the middle portion of the outermost shell negative electrode uniform.

It is advantageous in terms of efficiency to selectively perform the deactivation operation only when the local reaction has a certain ratio or more compared to the main reaction, but there is currently no clear guide for determining whether to perform the deactivation operation of the outermost shell negative electrode.

## Disclosure

## Technical Problem

It is a problem to be solved by the present invention to provide a deactivation method of an outermost shell negative electrode in an electrode assembly capable of providing a clear guide related to a deactivation operation of the outermost shell negative electrode, a manufacturing method of an electrode assembly, and an electrode assembly manufactured from the manufacturing method.

**Technical Solution**

In order to solve the problem, according to one example of the present invention, a deactivation method of a pair of outermost shell negative electrodes, each of which is disposed at the uppermost end and the lowermost end of an electrode assembly including a plurality of positive electrodes, a plurality of negative electrodes, and a plurality of separators, is provided, wherein the deactivation method of outermost shell negative electrodes comprises a deactivation step of forming a deactivation region having a predetermined width (w) along an edge of one side of the outermost shell negative electrode, wherein in the deactivation step, the width (w) is determined based on the horizontal length of the outermost shell negative electrode, the vertical length of the outermost shell negative electrode, and the number of mono cells composed of the separator, the negative electrode, the separator, and the positive electrode in the electrode assembly.

In the deactivation method of outermost shell negative electrodes, in the deactivation step, the width (w) is determined in a range of $0.9P_1$ to $1.2P_1$, where the $P_1$ may be calculated by Equation 1 below:

$$[\text{Equation 1}]$$

$$P_1 = \frac{0.1a1b1}{(a1+b1)\times\log c1}$$

In Equation 1 above, $a_1$ is the horizontal length of the outermost shell negative electrode, $b_1$ is the vertical length of the outermost shell negative electrode, and $c_1$ is the number of mono cells composed of the separator, the negative electrode, the separator, and the positive electrode in the electrode assembly.

Also, in the deactivation method of outermost shell negative electrodes, in the deactivation step, the width (w) may be determined based on a ratio (A/B) of an area sum (A) of one sides of the plurality of negative electrodes to an area sum (B) of one sides of the plurality of positive electrodes in the electrode assembly.

In addition, in the deactivation method of outermost shell negative electrodes, in the deactivation step, the width (w) is determined in a range of $1.0X_1$ to $1.25X_1$ when the ratio (A/B) is 1.1 or more to less than 1.2, where the $X_1$ may be calculated by Equation 2 below:

$$[\text{Equation 2}]$$

$$(Y_1\text{-}X_1)\cdot(Z_1\text{-}X_1)=Y_1\cdot Z_1\cdot 0.85$$

In Equation 2 above, $Y_1$ is the horizontal length of the outermost shell negative electrode, and $Z_1$ is the vertical length of the outermost shell negative electrode.

Furthermore, in the deactivation method of outermost shell negative electrodes, in the deactivation step, the width (w) is determined in a range of $1.0X_2$ to $1.5X_2$ when the ratio (A/B) is 1.2 or more, where the $X_2$ may be calculated by Equation 3 below:

$$[\text{Equation 3}]$$

$$(Y\text{-}X_2)\cdot(Z\text{-}X_2)=Y_2\cdot Z_2\cdot 0.8$$

In Equation 3 above, $Y_2$ is the horizontal length of the outermost shell negative electrode, and $Z_2$ is the vertical length of the outermost shell negative electrode.

Also, in the deactivation method of outermost shell negative electrodes, the deactivation region may be formed by attaching an insulating tape or coating an insulating material.

In addition, in the deactivation method of outermost shell negative electrodes, the insulating tape may have a polyimide layer formed on one side or both sides.

Furthermore, in the deactivation method of outermost shell negative electrodes, the insulating material may comprise an epoxy compound or aluminum oxide.

According to another example of the present invention, a manufacturing method of an electrode assembly is provided, which comprises: a deactivation step of forming a deactivation region having a predetermined width (w) along an edge of one side of a first negative electrode; a step of sequentially laminating a separator, the first negative electrode on which the deactivation region is formed, a separator, and a positive electrode to manufacture a first mono cell; a step of sequentially laminating a separator, a second negative electrode on which the deactivation region is not formed, a separator, and a positive electrode to manufacture a plurality of second mono cells; a step of sequentially laminating a separator, the first negative electrode on which the deactivation region is formed, and a separator to manufacture a half-cell; a step of sequentially laminating the plurality of second mono cells on the first mono cell to manufacture a laminate; and a step of laminating the half-cell on the second mono cell disposed at the uppermost end of the laminate to manufacture an electrode assembly, wherein in the deactivation step, the width (w) is determined based on the horizontal length of the first negative electrode, the vertical length of the first negative electrode, and the number of first and second mono cells in the electrode assembly.

Also, in the manufacturing method of the electrode assembly, in the deactivation step, the width (w) is determined in a range of $0.9P_2$ to $1.2P_2$, where the $P_2$ may be calculated by Equation 4 below:

[Equation 4]

$$P_2 = \frac{0.1a2b2}{(a2+b2)\times\log c2}$$

In Equation 4 above, $a_2$ is the horizontal length of the first negative electrode, $b_2$ is the vertical length of the first negative electrode, and $c_2$ is the number of the first and second mono cells.

In addition, in the manufacturing method of the electrode assembly, in the deactivation step, the width (w) may be determined based on a ratio (A/B) of an area sum (A) of one sides of a plurality of negative electrodes to an area sum (B) of one sides of a plurality of positive electrodes in the electrode assembly.

Furthermore, in the manufacturing method of the electrode assembly, in the deactivation step, the width (w) is determined in a range of $1.0X_3$ to $1.25X_3$ when the ratio (A/B) is 1.1 or more to less than 1.2, where the $X_3$ may be calculated by Equation 5 below:

[Equation 5]

$$(Y_2-X_3)\cdot(Z_2-X_3)=Y_2\cdot Z_2\cdot 0.85$$

In Equation 5 above, $Y_2$ is the horizontal length of the first negative electrode, and $Z_2$ is the vertical length of the first negative electrode.

In addition, in the manufacturing method of the electrode assembly, in the deactivation step, the width (w) is determined in a range of $1.0X_4$ to $1.5X_4$ when the ratio (A/B) is 1.2 or more, where the $X_4$ may be calculated by Equation 6 below:

[Equation 6]

$$(Y_2-X_4)\cdot(Z_2-X_4)=Y_2\cdot Z_2\cdot 0.8$$

In Equation 4 above, $Y_2$ is the horizontal length of the first negative electrode, and $Z_2$ is the vertical length of the first negative electrode.

Furthermore, in the manufacturing method of the electrode assembly, it may comprise, before the deactivation step, a determination step determining whether deactivation of the first negative electrodes in the first mono cell and the half-cell is necessary based on the number of the first and second mono cells.

Also, in the manufacturing method of the electrode assembly, it may be determined in the determination step that when the number of the first and second mono cells is less than a predetermined value, the deactivation of the first negative electrodes in the first mono cell and the half-cell is necessary.

In addition, in the manufacturing method of the electrode assembly, it may be determined in the determination step that when the number of the first and second mono cells is less than 15, the deactivation of the first negative electrodes in the first mono cell and the half-cell is necessary.

Furthermore, in the manufacturing method of the electrode assembly, it may comprise, before the deactivation step, a determination step determining whether deactivation of the first negative electrodes in the first mono cell and the half-cell is necessary based on the ratio (A/B).

In addition, in the manufacturing method of the electrode assembly, it may be determined in the determination step that when the ratio (A/B) is 1.1 or more, the deactivation of the first negative electrodes in the first mono cell and the half-cell is necessary.

According to another example of the present invention, an electrode assembly is provided, which comprises: a first mono cell obtained by sequentially laminating a separator, a first negative electrode on which a deactivation region having a predetermined width (w) is formed along an edge of one side, a separator, and a positive electrode; a plurality of second mono cells laminated on the first mono cell and obtained by sequentially laminating a separator, a second negative electrode, a separator, and a positive electrode; and a half-cell laminated on the second mono cell disposed at the uppermost end and obtained by sequentially laminating a separator, a first negative electrode on which a deactivation region is formed, and a separator, wherein the deactivation region has a width (w) in a range of $0.9P_2$ to $1.2P_2$, and the $P_2$ is calculated by Equation 4 below:

[Equation 4]

$$P_2 = \frac{0.1 a2 b2}{(a2+b2) \times \log c2}$$

In Equation 4 above, $a_2$ is the horizontal length of the first negative electrode, $b_2$ is the vertical length of the first negative electrode, and $c_2$ is the number of the first and second mono cells.

According to another example of the present invention, an electrode assembly is provided, which comprises: a first mono cell obtained by sequentially laminating a separator, a first negative electrode on which a deactivation region having a predetermined width (w) is formed along an edge of one side, a separator, and a positive electrode; a plurality of second mono cells laminated on the first mono cell and obtained by sequentially laminating a separator, a second negative electrode, a separator, and a positive electrode; and a half-cell laminated on the second mono cell disposed at the uppermost end and obtained by sequentially laminating a separator, a first negative electrode on which a deactivation region is formed, and a separator, wherein when a ratio (A/B) of an area sum (A) of one sides of the plurality of negative electrodes to an area sum (B) of one sides of the plurality of positive electrodes in the electrode assembly is 1.1 or more to less than 1.2, the deactivation region has a width (w) in a range of $1.0X_3$ to $1.25X_3$, and when a ratio (A/B) of an area sum (A) of one sides of the plurality of negative electrodes to an area sum (B) of one sides of the plurality of positive electrodes in the electrode assembly is 1.2 or more, the deactivation region has a width (w) in a range of $1.0X_4$ to $1.5X_4$, where the $X_3$ and $X_4$ are calculated by Equations 5 and 6 below, respectively:

[Equation 5]

$$(Y_2-X_3) \cdot (Z_2-X_3)=Y_2 \cdot Z_2 \cdot 0.85$$

[Equation 6]

$$(Y_2-X_4) \cdot (Z_2-X_4)=Y_2 \cdot Z_2 \cdot 0.8$$

In Equations 5 and 6 above, $Y_2$ is the horizontal length of the first negative electrode, and $Z_2$ is the vertical length of the first negative electrode.

**Advantageous Effects**

The present invention can provide a clear guide related to the deactivation operation of the outermost shell negative electrode in the electrode assembly.

**Description of Drawings**

Figure 1 is a diagram showing a laminated structure of an electrode assembly according to one example of the present invention.

Figure 2 is a diagram showing a deactivation region of an outermost shell negative electrode.

Figure 3 is a diagram showing a mono cell and a half-cell including a double-sided electrode in which two single-sided electrodes are bonded.

Figure 4 is a diagram for explaining a local reaction and a main reaction in an electrode assembly upon an activation process.

**Best Mode**

Hereinafter, a deactivation method of an outermost shell negative electrode according to an example of the present invention will be described in detail with reference to the attached drawings.

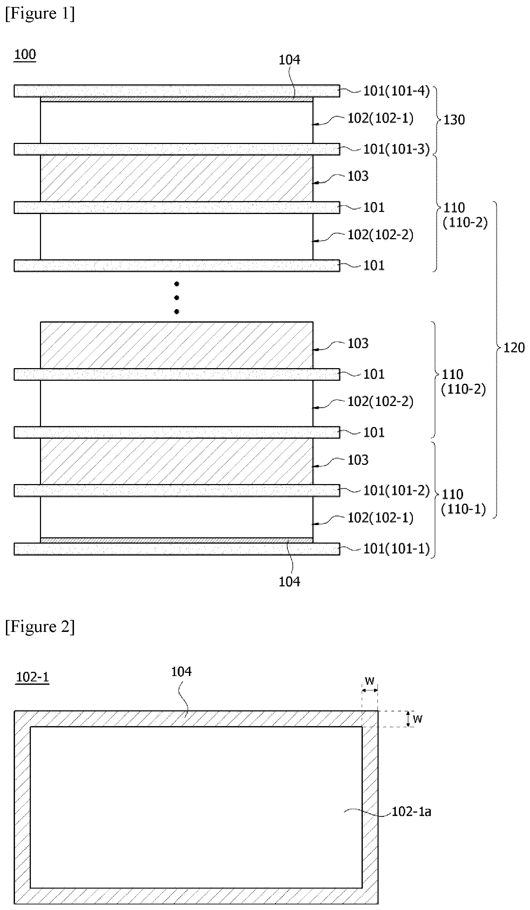

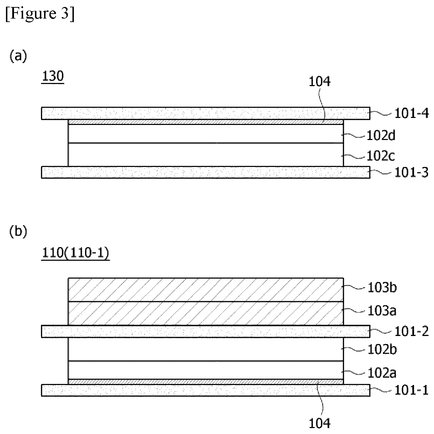

Figure 1 is a diagram showing a laminated structure of an electrode assembly according to one example of the present invention, Figure 2 is a diagram showing a deactivation region of an outermost shell negative electrode, and Figure 3 is a diagram showing a mono cell and a half-cell including a double-sided electrode in which two single-sided electrodes are bonded.

The present invention relates to a deactivation method of a pair of outermost shell negative electrodes (102-1) disposed at the uppermost end and the lowermost end, respectively, of an electrode assembly (100) including a plurality of positive electrodes (103), a plurality of negative electrodes (102), and a plurality of separators (101).

The method comprises a deactivation step of forming a deactivation region (104) having a predetermined width (w) along an edge of one side of the outermost shell negative electrode (102-1).

In the deactivation step, the width (w) is determined based on the horizontal length of the outermost shell negative electrode (102-1), the vertical length of the outermost shell negative electrode (102-1), and the number of mono cells (110) composed of a separator (101), a negative electrode (102), a separator (101), and a positive electrode (103) in the electrode assembly (100).

First, in the present invention, the electrode assembly (100) may comprise a mono cell (110) in which the separator (101), the negative electrode (102), the separator (101), and the positive electrode (103) are sequentially laminated, and a half-cell (130) in which the separator (101), the negative electrode (102), and the separator (101) are sequentially laminated.

The electrode assembly (100) may comprise a laminate (120) in which a plurality of mono cells (110) is laminated, and a half-cell (130) laminated on the laminate (120).

In the electrode assembly (100), a first mono cell (110-1) may be disposed at the lowermost end, and a half-cell (130) may be disposed at the uppermost end.

In the present invention, to distinguish between the mono cell disposed at the lowermost end and the other mono cells, the mono cell disposed at the lowermost end is called a first mono cell (110-1), and the other mono cells are called second mono cells (110-2).

The first mono cell (110-1) and the second mono cells (110-2) are distinguished according to whether a deactivation region in the negative electrode is formed. The first mono cell (110-1) may comprise a first negative electrode (102-1) in which a deactivation region is formed, and the second mono cell (110-2) may comprise a second negative electrode (102-2) in which a deactivation region is not formed.

In the present invention, the first negative electrode (102-1) in which a deactivation region (104) is formed is an outermost shell negative electrode. Therefore, the reference numeral of the first negative electrode will be used as '102-1,' which is the same as the outermost shell negative electrode. In addition, to distinguish between the outermost shell negative electrode and the remaining negative electrodes, the remaining negative electrodes will be called second negative electrodes (102-2).

In the present invention, the outermost shell negative electrode (102-1) may mean the negative electrode of the first mono cell (110-1) located at the lowermost end of the laminate (120) and the negative electrode of the half-cell (130).

Since the mono cell (110) and the half-cell (130) are each manufactured by laminating a separator on both sides of the negative electrode (102), the deactivation step may be performed before the negative electrode (102) and the separator (101) are laminated.

That is, in the present invention, the deactivation step may be performed before manufacturing the mono cell (110) and the half-cell (130).

For example, the first mono cell (110-1) disposed at the lowermost end and the half-cell (130) disposed at the uppermost end may be manufactured by laminating the outermost shell negative electrode (102-1) in which the deactivation region is formed through the deactivation step according to the method according to the present invention, and the separator (101).

In the present invention, the positive electrode (103) or the negative electrode (102) has one side of a rectangle formed by a pair of long sides and a pair of short sides. In the present invention, the horizontal length of the outermost shell negative electrode means the length of the long side, and the vertical length of the outermost shell negative electrode means the length of the short side.

In addition, in the present invention, one side of the electrode has a rectangular shape, and in the present invention, it is interpreted that one side of the electrode excludes an electrode tab formed to protrude outside the cross-section of the rectangle.

As the width (w) is determined based on the horizontal length of the outermost electrode (102-1), the vertical length of the outermost shell negative electrode (102-1), and the number of mono cells (110) composed of the separator (101), the negative electrode (102), the separator (101), and the positive electrode (103) in the electrode assembly (100), it is possible to secure a minimum deactivation region without deteriorating the battery performance, and thus it is possible to expect a reduction effect of a manufacturing cost consumed in forming the deactivation region.

In one example, in the deactivation step, the width (w) is determined in a range of $0.9P_1$ to $1.2P_1$, where the $P_1$ may be calculated by Equation 1 below:

[Equation 1]

$$P_1 = \frac{0.1a1b1}{(a1+b1)\times\log c1}$$

In Equation 1 above, $a_1$ is the horizontal length of the outermost shell negative electrode (102-1), $b_1$ is the vertical length of the outermost shell negative electrode (102-1), and $c_1$ is the number of mono cells (110) composed of the separator (101), the negative electrode (102), the separator (101), and the positive electrode (103) in the electrode assembly (100).

In Equation 1 above, $c_1$ may be a natural number of less than 15, and for example, may be a natural number of 2 to 14.

The number of mono cells (110) may be determined in advance before manufacturing the electrode assembly (100), and thus, the width of the deactivation region may be adjusted in consideration of a c1 value in the deactivation step performed before manufacturing the mono cell (110) and the half-cell (130).

For example, when manufacturing an electrode assembly (100) having 14 mono cells (110), the deactivation step may adjust the width of the deactivation region using a p value calculated by substituting 14 into c of Equation 1 above.

In addition, the unit of the width of the deactivation region (104) may be mm or cm.

As the electrode assembly (100) comprises a plurality of mono cells (110) and one half-cell (130), the numbers of negative electrodes (102) and positive electrodes (103) may be different from each other, and for example, the number of negative electrodes (102) may be one more than the number of positive electrodes (103).

The electrode assembly (100) including two mono cells (110) and one half-cell (130) may comprise two positive electrodes (103) and three negative electrodes (102).

In one example, the deactivation region (104) may be formed on one side of the negative electrode in contact with the outermost shell separator.

Specifically, in the first mono cell (110-1) located at the lowermost end, the first separator (101-1), the outermost shell negative electrode (102-1), the second separator (101-2), and the positive electrode (103) may be sequentially laminated, and the deactivation region (104) may be formed on one side (102-1a) of the outermost shell negative electrode (102-1) facing the first separator (101-1).

In addition, in the half-cell (130) located at the uppermost end, the third separator (101-3), the outermost shell negative electrode (102-1), and the fourth separator (101-4) may be sequentially laminated, and the deactivation region (104) may be formed on one side (102-1a) of the outermost shell negative electrode (102-1) facing the fourth separator (101-4).

Figure 3 is a diagram showing a mono cell and a half-cell including a double-sided electrode in which two single-sided electrodes are bonded.

Referring to Figure 3, the positive electrode may be a double-sided positive electrode in which two single-sided positive electrodes are bonded, and the negative electrode may be a double-sided negative electrode in which two single-sided negative electrodes are bonded.

For example, the electrode assembly (100) including two mono cells (110) and one half-cell (130) may comprise two double-sided positive electrodes and three double-sided negative electrodes, and may comprise four single-sided positive electrodes and six single-sided negative electrodes.

Meanwhile, in the case of a double-sided negative electrode in which two single-sided negative electrodes are bonded, the deactivation region (104) may be formed on one side of the single-sided negative electrode located relatively at the outermost shell.

For example, as in Figure 3(a), in the half-cell (130) located at the uppermost end, the third separator (101-3), the third single-sided negative electrode (102a), the fourth single-sided negative electrode (102b), and the fourth separator (101-4) may be sequentially laminated, and the deactivation region (104) may be formed on one side of the second single-sided negative electrode (102b) facing the fourth separator (101-4).

Also, as in Figure 3(b), in the first mono cell (110-1) located at the lowermost end, the first separator (101-1), the first single-sided negative electrode (102a), the second single-sided negative electrode (102b), the second separator (101-2), the first single-sided positive electrode (103a), and the second single-sided positive electrode (103b) may be sequentially laminated, and the deactivation region (104) may be formed on one side of the first single-sided negative electrode (102a) facing the first separator (101).

In addition, for an NP ratio (ratio of negative electrode capacity to positive electrode capacity per unit area) reversal and lithium plating prevention, the negative electrode (102) may have an area larger than the area of the positive electrode (103).

In one example, in the deactivation step, the width (w) may be determined based on a ratio (A/B) of an area sum (A) of one sides of the plurality of negative electrodes (102) to an area sum (B) of one sides of the plurality of positive electrodes (103) in the electrode assembly (100).

As the width (w) is determined based on the ratio (A/B), it is possible to secure a minimum deactivation region without deteriorating a battery performance, and thus it is possible to expect a reduction effect of a manufacturing cost consumed in forming the deactivation region.

Specifically, the ratio (A/B) may decrease as the number of mono cells in the electrode assembly (e.g., the sum of the numbers of the first and second mono cells) increases, and it may decrease as the area of one side of the positive electrode and the area of one side of the negative electrode increase.

Hereinafter, Tables 1 to 3 exemplarily show the ratios (A/B) according to the increase in the number of mono cells in the electrode assembly, and the areas of one side of the positive electrode and one side of the negative electrode.

Here, the area of one side of the positive electrode may be calculated by multiplying the horizontal length of the positive electrode and the vertical length of the positive electrode, and the area of one side of the negative electrode may be calculated by multiplying the horizontal length of the negative electrode and the vertical length of the negative electrode.

Also, the area sum (A) of one sides of multiple negative electrodes may be calculated by multiplying the area of one side of the negative electrode and the number of negative electrodes, and the area sum (B) of one sides of multiple positive electrodes may be calculated by multiplying the area of one side of the negative electrode and the number of positive electrodes.

In addition, the electrode assemblies of Tables 1 and 3 were manufactured by laminating two mono cells and one half-cell, where the number of positive electrodes was two and the number of negative electrodes was three.

Furthermore, the electrode assembly of Table 2 was manufactured by laminating four mono cells and one half-cell, where the number of positive electrodes was four and the number of negative electrodes was five.

Hereinafter, in Tables 1 to 3, the 'number of mono cells in electrode assembly' is the number sum of the first mono cells (110-1) and the second mono cells (110-2).

[Table 1]

| Positive electrode horizontal length | 3cm | Positive electrode vertical length | 4cm |
|---|---|---|---|
| Negative electrode horizontal length | 3.1cm | Negative electrode vertical length | 4.1cm |
| Area of one side of positive electrode | 12cm$^2$ | Number of positive electrode | 2 |
| Area of one side of negative electrode | 12.71cm$^2$ | Number of negative electrode | 3 |
| Number of mono cells in electrode assembly | 2 | Ratio (A/B) | 1.59 |

[Table 2]

| Positive electrode horizontal length | 3cm | Positive electrode vertical length | 4cm |
|---|---|---|---|
| Negative electrode horizontal length | 3.1cm | Negative electrode vertical length | 4.1cm |
| Area of one side of positive electrode | 12cm$^2$ | Number of positive electrode | 4 |
| Area of one side of negative electrode | 12.71cm$^2$ | Number of negative electrode | 5 |
| Number of mono cells in electrode assembly | 4 | Ratio (A/B) | 1.32 |

[Table 3]

| Positive electrode horizontal length | 8cm | Positive electrode vertical length | 20cm |
|---|---|---|---|
| Negative electrode horizontal length | 8.1cm | Negative electrode vertical length | 20.1cm |
| Area of one side of positive electrode | 160cm$^2$ | Number of positive electrode | 2 |
| Area of one side of negative electrode | 162.81cm$^2$ | Number of negative electrode | 3 |
| Number of mono cells in electrode assembly | 2 | Ratio (A/B) | 1.53 |

Referring to Tables 1 and 2 above, it could be confirmed that when the number of mono cells in the electrode assembly increased from 2 to 4, the ratio (A/B) decreased from 1.59 to 1.32.

In addition, referring to Tables 1 and 3, it could be confirmed that when the positive electrode area increased from 12cm$^2$ to 160cm$^2$ and the negative electrode area increased from 12.71cm$^2$ to 162.81cm$^2$, the ratio (A/B) decreased from 1.59 to 1.53.

From Tables 1 to 3 above, it can be confirmed that the ratio (A/B) decreases as the number of mono cells in the electrode assembly increases, and it decreases as the area of one side of the positive electrode and the area of one side of the negative electrode increase.

In addition, if the number of mono cells in the electrode assembly increases, the ratio of electrodes participating in the main reaction increases, whereby the local reaction ratio compared to the main reaction may decrease.

Similarly, as the area of one side of the positive electrode or the area of one side of the negative electrode increases, the ratio of electrodes participating in the main reaction increases, whereby the local reaction ratio compared to the main reaction may decrease. When the local reaction ratio decreases to a negligible level, the deactivation operation may not be necessary.

Therefore, the ratio (A/B) may be utilized as one indicator capable of quantitatively analyzing the local reaction ratio as it is linked to the number of mono cells in the electrode assembly and the area of one side of the electrode, which affect the local reaction ratio.

The present invention can quantitatively analyze whether the local reaction ratio is negligible or not through the ratio (A/B), and can form, based on this, the deactivation region to an optimal size capable of minimizing the use of unnecessary deactivation materials.

In one example, in the deactivation step, the width (w) is determined in a range of $1.0X_1$ to $1.25X_1$ when the ratio (A/B) is 1.1 or more to less than 1.2, where the $X_1$ may be calculated by Equation 2 below:

$$[\text{Equation 2}]$$

$$(Y_1-X_1)\cdot(Z_1-X_1)=Y_1\cdot Z_1\cdot 0.85$$

In Equation 2 above, $Y_1$ is the horizontal length of the outermost shell negative electrode (102-1), and $Z_1$ is the vertical length of the outermost shell negative electrode (102-1).

In another example, in the deactivation step, the width (w) is determined in a range of $1.0X_2$ to $1.5X_2$ when the ratio (A/B) is 1.2 or more, where the $X_2$ may be calculated by Equation 3 below:

[Equation 3]

$$(Y-X_2) \cdot (Z-X_2) = Y_2 \cdot Z_2 \cdot 0.8$$

In Equation 3 above, $Y_2$ is the horizontal length of the outermost shell negative electrode (102-1), and $Z_2$ is the vertical length of the outermost shell negative electrode (102-1).

In Equations 3 and 4 above, the units of the horizontal length of the outermost shell negative electrode (102-1) and the vertical length of the outermost shell negative electrode (102-1) may be mm or cm.

As the width (w) is determined differently based on the ratio (A/B), the local reaction may provide the size of the optimal deactivation region (104) which is negligible compared to the main reaction, thereby minimizing the use of unnecessary deactivation materials.

In one example, the deactivation region (104) may be formed by attaching an insulating tape or coating an insulating material.

The coating of the insulating material may be performed using various known coating methods such as spray coating, and die coating without limitation.

The insulating tape may have a polyimide layer formed on one side or both sides. The insulating tape in which the polyimide layer is formed on one side or both sides has excellent adhesiveness and insulation properties, whereby it is possible to exhibit an excellent effect in deactivating the outermost shell negative electrode (102-1).

The insulating material may comprise an epoxy compound or aluminum oxide.

The present invention also relates to a manufacturing method of an electrode assembly. The manufacturing method of the electrode assembly is a manufacturing method of an electrode assembly in conjunction with the deactivation method of the outermost shell negative electrode as described above. Accordingly, detailed descriptions overlapping with the above-described contents will be omitted below.

Referring to the drawings, the manufacturing method comprises: a deactivation step of forming a deactivation region (104) having a predetermined width (w) along an edge of one side of a first negative electrode (102-1); a step of sequentially laminating a separator (101), the first negative electrode (102-1) on which the deactivation region (104) is formed, a separator (101), and a positive electrode (103) to manufacture a first mono cell (110-1); a step of sequentially laminating a separator (101), a second negative electrode (102-2) on which the deactivation region is not formed, a separator (101), and a positive electrode (103) to manufacture a plurality of second mono cells (110-2); a step of sequentially laminating a separator (101), the first negative electrode (102-1) on which the deactivation region is formed, and a separator (101) to manufacture a half-cell; a step of sequentially laminating the plurality of second mono cells (110-2) on the first mono cell (110-1) to manufacture a laminate (120); and a step of laminating the half-cell (130) on the second mono cell (110-2) disposed at the uppermost end of the laminate (120) to manufacture an electrode assembly (100), wherein in the deactivation step, the width (w) is determined based on the horizontal length of the first negative electrode (102-1), the vertical length of the first negative electrode (102-1), and the number of the first and second mono cells (110-1, 110-2).

In one example, in the deactivation step, the width (w) is determined in a range of $0.9P_2$ to $1.2P_2$, where the $P_2$ may be calculated by Equation 4 below:

[Equation 4]

$$P_2 = \frac{0.1a2b2}{(a2+b2) \times \log c2}$$

In Equation 4 above, $a_2$ is the horizontal length of the first negative electrode, $b_2$ is the vertical length of the first negative electrode, and $c_2$ is the number of the first and second mono cells.

In addition, in the deactivation step, the width (w) may be determined based on a ratio (A/B) of an area sum (A) of one sides of a plurality of negative electrodes (102) to an area sum (B) of one sides of a plurality of positive electrodes (103) in the electrode assembly (100).

In one example, in the deactivation step, the width (w) is determined in a range of $1.0X_3$ to $1.25X_3$ when the ratio (A/B) is 1.1 or more to less than 1.2, where the $X_3$ may be calculated by Equation 5 below:

[Equation 5]

$$(Y_2-X_3)\cdot(Z_2-X_3)=Y_2\cdot Z_2\cdot 0.85$$

In Equation 5 below, $Y_2$ is the horizontal length of the first negative electrode (102-1), and $Z_2$ is the vertical length of the first negative electrode (102-1).

In another example, in the deactivation step, the width (w) is determined in a range of $1.0X_4$ to $1.5X_4$ when the ratio (A/B) is 1.2 or more, where the $X_4$ may be calculated by Equation 6 below:

[Equation 6]

$$(Y_2-X_4)\cdot(Z_2-X_4)=Y_2\cdot Z_2\cdot 0.8$$

In Equation 6 above, $Y_2$ is the horizontal length of the first negative electrode (102-1), and $Z_2$ is the vertical length of the first negative electrode (102-1).

In Equations 5 and 6 above, the units of the horizontal length of the first negative electrode (102-1) and the vertical length of the first negative electrode (102-1) may be mm or cm.

In one specific example, it may comprise, before the deactivation step, a determination step determining whether deactivation of the first negative electrodes (102-1) in the first mono cell (110-1) and the half-cell (130) is necessary based on the number of the first and second mono cells (110-1, 110-2).

When it is determined from a determination step that the deactivation of the electrode assembly (100) is necessary, the method according to the present invention determines the width (w) of the deactivation region (104) in the deactivation step based on the horizontal length of the first negative electrode (102-1), the vertical length of the first negative electrode (102-1), and the number of the first and second mono cells (110-1, 110-2), thereby reducing the resistance due to local reactions while minimizing the use of unnecessary materials in the deactivation region, whereby it is possible to prevent the battery (lithium secondary battery) performance from deteriorating, where a detailed description thereof will be provided below.

The determination step may determine that the deactivation of the first negative electrodes (102-1) in the first mono cell (110-1) and the half-cell (130) is necessary when the number of the first and second mono cells (110-1, 110-2) is less than a predetermined value.

Specifically, the determination step may determine that the deactivation of the first negative electrodes (102-1) in the first mono cell (110-1) and the half-cell (130) is necessary when the number of the first and second mono cells (110-1, 110-2) is less than 15.

That is, when the number sum of the first and second mono cells (110-1, 110-2) is within the range of 2 to 14, the determination step may determine that the deactivation of the first negative electrodes (102-1) in the first mono cell (110-1) and the half-cell (130) is necessary.

In other words, the deactivation step according to the method of the present invention may be performed when manufacturing an electrode assembly in which the number sum of the first and second mono cells (110-1, 110-2) is less than 15, for example, within the range of 2 to 14.

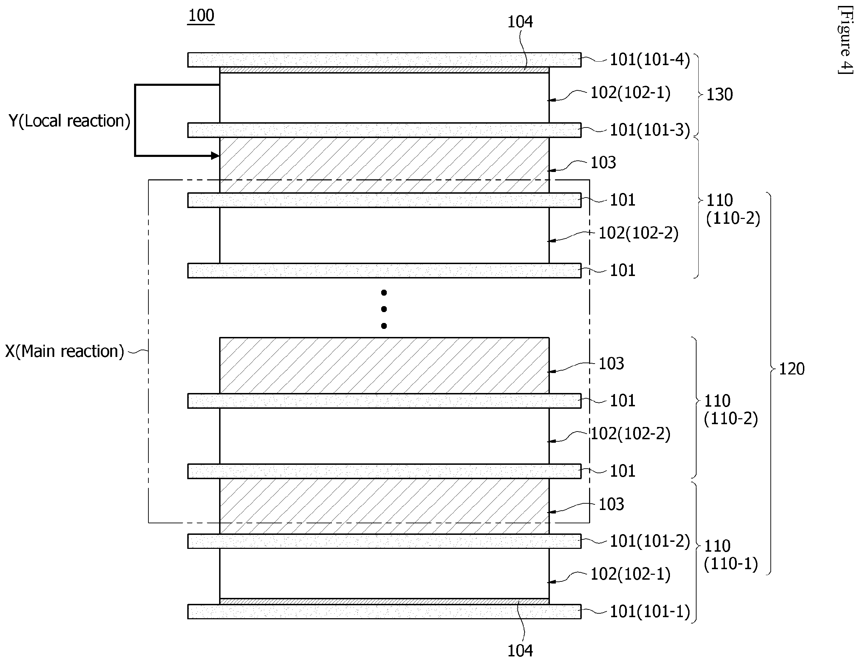

Figure 4 is a diagram for explaining a local reaction and a main reaction in an electrode assembly upon an activation process.

Referring to Figure 4, upon the activation process, the first negative electrode (102-1) reacts with an adjacent electrode, whereby a local reaction involved in charging and discharging occurs. Then, while lithium moves between the electrodes, separators, and electrolyte within the remaining mono cells (110), except for the first negative electrode (102-1), a charging and discharging reaction (main reaction) occurs.

Particularly, when the number of mono cells (110) within the electrode assembly (100) is less than 15, the ratio of the local reaction increases to a certain degree or more compared to the main reaction. Accordingly, unnecessary electrolyte consumption and unevenness of the electrode assembly occur, and the resistance value in the secondary battery increases, whereby there may be a problem that the output of the secondary battery is lowered.

To solve such a problem, the determination step determines that the deactivation of the first negative electrodes (102-1) in the first mono cell (110-1) and the half-cell (130) is necessary when the number of the first and second mono cells (110-1, 110-2) is less than 15, and it is possible to perform the deactivation step.

On the other hand, the determination step may determine that the deactivation is unnecessary when the number of the first and second mono cells (110-1, 110-2) is 15 or more. When the number of the first and second mono cells (110-1, 110-2) is 15 or more, the ratio of the local reaction is reduced to a certain level or less compared to the main reaction, whereby the local reaction is negligible, so that even if the deactivation operation is not performed, it may not be a major problem.

In terms of the main reaction and the local reaction, the deactivation step determines the width (w) of the deactivation region (104) based on the horizontal length of the first negative electrode (102-1), the vertical length of the first negative electrode (102-1), and the number of the first and second mono cells (110-1, 110-2) according to Equation 2 above, thereby providing an optimal size of the deactivation region (104) in which the local reaction is negligible compared to the main reaction, whereby it is possible to minimize the material consumption of the unnecessary deactivation region (104).

In addition, the method according to the present invention may comprise, before the deactivation step, a determination step determining whether deactivation of the first negative electrodes (102-1) in the first mono cell (110-1) and the half-cell (130) is necessary based on the ratio (A/B).

The deactivation step may form the deactivation region (104) if it is determined that the deactivation is necessary in the determination step.

When the ratio (A/B) is 1.1 or more, the determination step may determine that the deactivation of the first negative electrodes (102-1) in the first mono cell (110-1) and the half-cell (130) is necessary.

When it is determined from a determination step that the deactivation of the electrode assembly (100) is necessary, the method according to the present invention determines the width (w) of the deactivation region (104) in the deactivation step based on the ratio (A/B), thereby reducing the resistance due to local reactions while minimizing the use of unnecessary materials in the deactivation region, whereby it is possible to prevent the battery (lithium secondary battery) performance from deteriorating.

Referring to Figure 4, upon the activation process, the first negative electrode (102-1) reacts with an adjacent electrode, whereby a local reaction involved in charging and discharging occurs. Then, while lithium moves between the electrodes, separators, and electrolyte within the remaining mono cells (110), except for the first negative electrode (102-1), a charging and discharging reaction (main reaction) occurs.

Particularly, when the ratio (A/B) is 1.1 or more, the ratio of the local reaction increases to a certain degree or more compared to the main reaction. Accordingly, unnecessary electrolyte consumption and unevenness of the electrode assembly occur, and the resistance value in the secondary battery increases, whereby there may be a problem that the output of the secondary battery is lowered.

To solve such a problem, the determination step determines that the deactivation of the first negative electrodes (102-1) is necessary when the ratio (A/B) is 1.1 or more, and it is possible to perform the deactivation step.

On the other hand, the determination step may determine that the deactivation is unnecessary when the ratio (A/B) is less than 1.1. When the ratio (A/B) is less than 1.1, the ratio of the local reaction is reduced to a certain level or less compared to the main reaction, whereby the local reaction is negligible, so that even if the deactivation operation is not performed, it may not be a major problem.

In terms of the main reaction and local reaction, the deactivation step determines the width (w) of the deactivation region (104) differently based on the ratio (A/B) according to Equations 5 and 6 above, thereby providing an optimal size of the deactivation region (104) in which the local reaction is negligible compared to the main reaction, whereby it is possible to minimize the material consumption of the unnecessary deactivation region (104).

The present invention also relates to an electrode assembly. The electrode assembly may be manufactured by the above-described method.

The electrode assembly (100) comprises a plurality of positive electrodes (103), a plurality of negative electrodes (102), and a plurality of separators (101), and comprises a pair of outermost shell negative electrodes (102-1) disposed at the uppermost end and the lowermost end, respectively.

Specifically, the electrode assembly (100) comprises a first mono cell (110-1) obtained by sequentially laminating a separator (101), a first negative electrode (102-1) on which a deactivation region (104) having a predetermined width (w) is formed along an edge of one side, a separator (101), and a positive electrode (103); a plurality of second mono cells (110-2) laminated on the first mono cell (110-1) and obtained by sequentially laminating a separator (101), a second negative electrode (102-2), a separator (101), and a positive electrode (103); and a half-cell (130) laminated on the second mono cell (110-2) disposed at the uppermost end and obtained by sequentially laminating a separator (101), a first negative electrode (102-1) on which a deactivation region is formed, and a separator (101), wherein the deactivation region (104) has a width (w) in a range of $0.9P_2$ to $1.2P_2$, where the $P_2$ may be calculated by Equation 4 below:

[Equation 4]

$$P_2 = \frac{0.1a2b2}{(a2+b2)\times\log c2}$$

In Equation 4 above, $a_2$ is the horizontal length of the first negative electrode, $b_2$ is the vertical length of the first negative electrode, and $c_2$ is the number of the first and second mono cells.

In one example, the number of the first and second mono cells (110-1, 110-2) may be less than 15.

As described above, when the number of the first and second mono cells (110-1, 110-2) is less than 15, problems due to local reactions may occur, so that the deactivation region (104) must be formed, where the width (w) of the deactivation region (104) is determined according to Equation 2, whereby it is possible to prevent problems due to local reactions while minimizing the unnecessary material use of the deactivation region.

In one example, the deactivation region (104) may comprise an insulating tape attached along an edge of one side of the first negative electrode (102-1), or an insulating material coated along the edge of the first negative electrode (102-1).

The coating of the insulating material may utilize various known coating methods, such as spray coating and die coating, without limitation.

The insulating tape may have a polyimide layer formed on one or both sides. The insulating tape having the polyimide layer formed on one or both sides has excellent adhesiveness and insulating properties, whereby it is possible to exhibit an excellent effect in deactivating the first negative electrode (102-1).

The insulating material may comprise an epoxy compound or aluminum oxide.

The present invention also relates to an electrode assembly. The electrode assembly may be manufactured by the above-described method.

The electrode assembly (100) comprises a plurality of positive electrodes (103), a plurality of negative electrodes (102), and a plurality of separators (101), and comprises a pair of outermost shell negative electrodes (102-1) disposed at the uppermost end and the lowermost end, respectively.

Specifically, the electrode assembly (100) comprises a first mono cell (110-1) obtained by sequentially laminating a separator (101), a first negative electrode (102-1) on which a deactivation region (104) having a predetermined width (w) is formed along an edge of one side, a separator (101), and a positive electrode (103); a plurality of second mono cells (110-2) laminated on the first mono cell (110-1) and obtained by sequentially laminating a separator (101), a second negative electrode (102-2), a separator (101), and a positive electrode (103); and a half-cell (130) laminated on the second mono cell (110-2) disposed at the uppermost end and obtained by sequentially laminating a separator (101), a first negative electrode (102-1) on which a deactivation region is formed, and a separator (101).

If the ratio (A/B) of the area sum of one sides of the plurality of negative electrodes (102) the area sum (B) of one sides of the plurality of positive electrodes (103) in the electrode assembly is 1.1 or more to less than 1.2, the width (w) of the deactivation region (104) is in a range of $1.0X_3$ to $1.25X_3$.

Then, the ratio (A/B) of the area sum (A) of one sides of the plurality of negative electrodes (102) to the area sum (B) of one sides of the plurality of positive electrodes (103) in the electrode assembly is 1.2 or more, the width (w) of the deactivation region is in a range of $1.0X_4$ to $1.5X_4$, where

the $X^3$ and $X^4$ are calculated by Equations 5 and 6 below, respectively:

$$[\text{Equation 5}]$$

$$(Y_2-X_3)\cdot(Z_2-X_3)=Y_2\cdot Z_2\cdot 0.85$$

$$[\text{Equation 6}]$$

$$(Y_2-X_4)\cdot(Z_2-X_4)=Y_2\cdot Z_2\cdot 0.8$$

In Equations 5 and 6 above, $Y_2$ is the horizontal length of the first negative electrode, and $Z_2$ is the vertical length of the first negative electrode.

The electrode assembly (100) satisfying the conditions has an optimal size of the deactivation region (104) in which the local reaction is negligible compared to the main reaction.

In one example, the deactivation region (104) may be formed by attaching an insulating tape or coating an insulating material.

The coating of the insulating material may utilize various known coating methods such as spray coating and die coating without limitation.

The insulating tape may have a polyimide layer formed on one or both sides. The insulating tape having the polyimide layer formed on one or both sides has excellent adhesiveness and insulation properties, whereby it is possible to exhibit an excellent effect in deactivating the first negative electrode (102-1).

The insulating material may comprise an epoxy compound or aluminum oxide.

Hereinafter, the present application is specifically described through examples, but the scope of the present application is not limited by the following examples.

**Manufacturing Examples**

Manufacturing of negative electrode

A negative electrode slurry was prepared by mixing artificial graphite: a conductive agent: a binder in a ratio of 94:3:3, and then a negative electrode was manufactured by sequentially performing application of the slurry on a copper current collector, drying, and rolling.

Manufacturing of positive electrode

A positive electrode slurry was prepared by mixing NCM811: carbon black: PVDF in a ratio of 90:5:5, and then a positive electrode was manufactured by sequentially performing application of the slurry on an aluminum current collector, drying, and rolling.

Separator

A polyethylene porous separator was prepared.

Electrolyte

An electrolyte was prepared by dissolving 1 M $LiPF_6$ in a mixed solvent in which EC (ethylene carbonate), DMC (dimethyl carbonate), and EMC (ethylmethyl carbonate) were mixed in a volume ratio of 3:4:3.

**Example 1A**

Electrode assembly

The manufactured negative electrode and positive electrode were cut to 5×7cm and 5.1×7.1cm, respectively.

Then, an insulating tape was applied along the edge of the negative electrode to a width of 0.5cm to manufacture an outermost shell electrode on which a deactivation region was formed.

One first mono cell obtained by sequentially laminating a separator, an outermost shell negative electrode (deactivation region O), a separator, and a positive electrode w, and four second mono cells obtained by sequentially laminating a separator, a negative electrode (deactivation region X), a separator, and a positive electrode were laminated to manufacture a laminate including a total of five mono cells.

Then, a half-cell obtained by sequentially laminating a separator, a negative electrode, and a separator was laminated on the mono cell located at the uppermost end of the laminate to manufacture an electrode assembly.

The electrode assembly manufactured according to Example 1A included five positive electrodes and six negative electrodes.

In addition, according to the specifications of the electrode assembly manufactured according to Example 1A, a $P_1$ value was 0.424, which was calculated by substituting 5.1 into $a_1$, substituting 7.1 into $b_1$, and substituting 5 into $c_1$ in Equation 1.

When the P1 value was 0.424, a range of $0.9\,P_1$ to $1.2\,P_1$ was calculated as 0.382mm to 0.509mm, so that it was confirmed that the width of the deactivation region of the electrode assembly manufactured in Example 1A, which was 0.5cm, was within the range of $0.9\,P_1$ to $1.2\,P_1$.

Lithium secondary battery

The manufactured electrode assembly was placed inside a pouch case, and then the above-prepared electrolyte was injected into the case.

Then, after pre-aging at room temperature for 2 days, they were charged at a charging rate of 0.1 C until an SOC reached 30%, and after aging for 1 day each at room temperature and 60°C, a degassing process of discharging gases inside the case was performed, thereby manufacturing a lithium secondary battery.

**Example 2A**

An electrode assembly and a lithium secondary battery were manufactured in the same manner as in Example 1, except that an outermost shell electrode on which a deactivation region was formed by applying an insulating tape to a width of 0.35cm along the edge of the negative electrode was manufactured, and a laminate having a total of 10 mono cells was manufactured by laminating one first mono cell and nine second mono cells.

The electrode assembly manufactured according to Example 2A included 10 positive electrodes and 11 negative electrodes.

In addition, according to the specifications of the electrode assembly manufactured according to Example 2A, a $P_1$ value was 0.297, which was calculated by substituting 5.1 into a1, substituting 7.1 into b1, and substitution 10 into c1 in Equation 1.

When the $P_1$ value was 0.297, a range of $0.9P_1$ to $1.2P_1$ was calculated as 0.267mm to 0.357mm, so that it was confirmed that the width of the deactivation region of the electrode assembly manufactured according to Example 2A, which was 0.35cm, was within the range of $0.9P_1$ to $1.2P_1$.

**Comparative Example 1A**

An electrode assembly and a lithium secondary battery were manufactured in the same manner as in Example 1A, except that a laminate comprising a total of five mono cells was manufactured by laminating five second mono cells without the first mono cell.

**Comparative Example 2A**

An electrode assembly and a lithium secondary battery were manufactured in the same manner as in Example 2A, except that a laminate comprising a total of ten mono cells was manufactured by laminating ten second mono cells without the first mono cell.

**Comparative Example 3A**

An electrode assembly and a lithium secondary battery were manufactured in the same manner as in Example 2A, except that a first mono cell comprising a first negative electrode on which a deactivation region was formed by applying an insulating tape to a width of 0.15cm along the edge of the negative electrode was manufactured.

According to the specifications of the electrode assembly manufactured in Comparative Example 3A, a $P_1$ value was 0.297, which was calculated by substituting 5.1 into $a_1$, substituting 7.1 into $b_1$, and substituting 10 into $c_1$ in Equation 1.

When the $P_1$ value was 0.297, a range of $0.9P_1$ to $1.2P_1$ was calculated as 0.267mm to 0.357mm, so that it was confirmed that the width of the deactivation region of the electrode assembly manufactured in Comparative Example 3A, which was 0.15cm, was outside the range of $0.9P_1$ to $1.2P_1$.

**Comparative Example 4A**

An electrode assembly and a lithium secondary battery were manufactured in the same manner as in Example 1A, except that a laminate including a total of 15 mono cells was manufactured by laminating 15 second mono cells without the first mono cell.

For reference, the electrode assembly manufactured according to Comparative Example 4A included 15 positive electrodes and 16 negative electrodes.

**Comparative Example 5A**

An electrode assembly and a lithium secondary battery were manufactured in the same manner as in Example 1A, except that an outermost shell electrode on which a deactivation region was formed by applying an insulating tape to a width of 0.18mm along the edge of the negative electrode, and a laminate including a total of 15 mono cells was manufactured by laminating one first mono cell and 14 second mono cells.

**Experimental Example 1**

The lithium secondary batteries manufactured in Example 1A, Example 2A, and Comparative Examples 1A to 5A were measured for 10-second discharge resistance at SOC50, and the results were shown in Table 4 below.

[Table 4]

| | Resistance (2.5C@SOC50, Ω) | No. of first mono cells | No, of second mono cells | Total no, of mono cells in electrode assembly |
|---|---|---|---|---|
| Example 1A | 0.124 | 1 | 4 | 5 |
| Example 2A | 0.061 | 1 | 9 | 10 |
| Comparative Example 1A | 0.136 | - | 5 | 5 |
| Comparative Example 2A | 0.064 | - | 10 | 10 |
| Comparative Example 3A | 0.064 | 1 | 9 | 10 |
| Comparative Example 4A | 0.038 | - | 15 | 15 |
| Comparative Example 5A | 0.038 | 1 | 14 | 15 |

From the experimental results above, it was confirmed that the lithium secondary batteries manufactured in Examples 1A and 2A had a reduced resistance compared to Comparative Examples 1A and 2A. In addition, in the case of Comparative Example 3A, it could be confirmed that when converted to the P1 value calculated according to Equation 1, the width (0.15mm) of the deactivation region did not satisfy the range of $0.9P_1$ to $1.2P_1$, and the effect of the deactivation region was not shown because it showed the same resistance value as Comparative Example 2A without forming the deactivation region.

Then, from Comparative Examples 4A and 5A, it could be confirmed that when the sum of the numbers of the first and second mono cells in the electrode assembly was 15 or more, similar resistance values were shown regardless of whether it was deactivated, from which it could be known that it was unnecessary to form the deactivation region when the sum of the numbers of the first and second mono cells was 15 or more.

**Experimental Example 2**

For a 900mA small pouch secondary battery, the resistance values of the electrode assemblies according to the ratio (A/B) were measured. The resistance was measured as a resistance value at 10 seconds with a discharge of 2.5C pulse, and the results were shown in Table 5 below.

[Table 5]

| | Ratio (A/B) | Resistance (Ω) |
|---|---|---|
| Example 1B | 1.26 | 0.074 |
| Example 2B | 1.2 | 0.07 |
| Comparative Example 1B | 1.26 | 0.087 |
| Comparative Example 2B | 1.2 | 0.083 |

In Examples 1B and 2B above, a deactivation region was formed by attaching an imide tape having a width in the range of $1.0X_4$ to $1.5X_4$ according to the $X_4$ value calculated from Equation 6 as described above to the edge of the outermost shell electrode, and in Comparative Examples 1B and 2B, a deactivation region was not formed. Examples 1B and 2B showed lower resistance values than Comparative Examples 1B and 2B. From this, it was confirmed that when the edge of the outermost shell electrode was deactivated at the ratio (A/B) of 1.1 or more, it was possible to prevent the local reaction participation of the outermost shell electrode.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

Explanation of reference numerals

100:      electrode assembly

101: separator
102: negative electrode
103: positive electrode
110: mono cell
120: laminate
130: half-cell
102-1: outermost shell negative electrode
104: deactivation region

## Claims

1. A deactivation method of a pair of outermost shell negative electrodes, each of which is disposed at the uppermost end and the lowermost end of an electrode assembly including a plurality of positive electrodes, a plurality of negative electrodes, and a plurality of separators, wherein

   the deactivation method of outermost shell negative electrodes comprises a deactivation step of forming a deactivation region having a predetermined width (w) along an edge of one side of the outermost shell negative electrode, and
   in the deactivation step, the width (w) is determined based on the horizontal length of the outermost shell negative electrode, the vertical length of the outermost shell negative electrode, and the number of mono cells composed of the separator, the negative electrode, the separator, and the positive electrode in the electrode assembly.

2. The deactivation method of outermost shell negative electrodes according to claim 1, wherein in the deactivation step, the width (w) is determined in a range of $0.9P_1$ to $1.2P_1$, where the $P_1$ is calculated by Equation 1 below:

   [Equation 1]

   $$P_1 = \frac{0.1a1b1}{(a1+b1)\times \log c1}$$

   wherein, $a_1$ is the horizontal length of the outermost shell negative electrode, $b_1$ is the vertical length of the outermost shell negative electrode, and $c_1$ is the number of mono cells composed of the separator, the negative electrode, the separator, and the positive electrode in the electrode assembly.

3. The deactivation method of outermost shell negative electrodes according to claim 1, wherein in the deactivation step, the width (w) is determined based on a ratio (A/B) of an area sum (A) of one sides of the plurality of negative electrodes to an area sum (B) of one sides of the plurality of positive electrodes in the electrode assembly.

4. The deactivation method of outermost shell negative electrodes according to claim 3, wherein in the deactivation step, the width (w) is determined in a range of $1.0X_1$ to $1.25X_1$ when the ratio (A/B) is 1.1 or more to less than 1.2, where the $X_1$ is calculated by Equation 2 below:

   [Equation 2]

   $$(Y_1-X_1)\cdot(Z_1-X_1)=Y_1\cdot Z_1\cdot 0.85$$

   wherein, $Y_1$ is the horizontal length of the outermost shell negative electrode, and $Z_1$ is the vertical length of the outermost shell negative electrode.

5. The deactivation method of outermost shell negative electrodes according to claim 3, wherein in the deactivation step, the width (w) is determined in a range of $1.0X_2$ to $1.5X_2$ when the ratio (A/B) is 1.2 or more, where the $X_2$ is calculated by Equation 3 below:

   [Equation 3]

   $$(Y-X_2)\cdot(Z-X_2)=Y_2\cdot Z_2\cdot 0.8$$

wherein, $Y_2$ is the horizontal length of the outermost shell negative electrode, and $Z_2$ is the vertical length of the outermost shell negative electrode.

6. The deactivation method of outermost shell negative electrodes according to claim 1, wherein the deactivation region is formed by attaching an insulating tape or coating an insulating material.

7. The deactivation method of outermost shell negative electrodes according to claim 6, wherein the insulating tape has a polyimide layer formed on one side or both sides.

8. The deactivation method of outermost shell negative electrodes according to claim 6, wherein the insulating material comprises an epoxy compound or aluminum oxide.

9. A manufacturing method of an electrode assembly, comprising:

   a deactivation step of forming a deactivation region having a predetermined width (w) along an edge of one side of a first negative electrode;
   a step of sequentially laminating a separator, the first negative electrode on which the deactivation region is formed, a separator, and a positive electrode to manufacture a first mono cell;
   a step of sequentially laminating a separator, a second negative electrode on which the deactivation region is not formed, a separator, and a positive electrode to manufacture a plurality of second mono cells;
   a step of sequentially laminating a separator, the first negative electrode on which the deactivation region is formed, and a separator to manufacture a half-cell;
   a step of sequentially laminating the plurality of second mono cells on the first mono cell to manufacture a laminate; and
   a step of laminating the half-cell on the second mono cell disposed at the uppermost end of the laminate to manufacture an electrode assembly, wherein
   in the deactivation step, the width (w) is determined based on the horizontal length of the first negative electrode, the vertical length of the first negative electrode, and the number of first and second mono cells in the electrode assembly.

10. The manufacturing method of an electrode assembly according to claim 9, wherein in the deactivation step, the width (w) is determined in a range of $0.9P_2$ to $1.2P_2$, where the $P_2$ is calculated by Equation 4 below:

[Equation 4]

$$P_2 = \frac{0.1a2b2}{(a2+b2)\times\log c2}$$

wherein, $a_2$ is the horizontal length of the first negative electrode, $b_2$ is the vertical length of the first negative electrode, and $c_2$ is the number of the first and second mono cells.

11. The manufacturing method of an electrode assembly according to claim 9, wherein in the deactivation step, the width (w) is determined based on a ratio (A/B) of an area sum (A) of one sides of a plurality of negative electrodes to an area sum (B) of one sides of a plurality of positive electrodes in the electrode assembly.

12. The manufacturing method of an electrode assembly according to claim 11, wherein in the deactivation step, the width (w) is determined in a range of $1.0X_3$ to $1.25X_3$ when the ratio (A/B) is 1.1 or more to less than 1.2, where the $X_3$ is calculated by Equation 5 below:

[Equation 5]

$$(Y_2\text{-}X_3)\cdot(Z_2\text{-}X_3)=Y_2\cdot Z_2\cdot 0.85$$

wherein, $Y_2$ is the horizontal length of the first negative electrode, and $Z_2$ is the vertical length of the first negative electrode.

13. The manufacturing method of an electrode assembly according to claim 11, wherein in the deactivation step, the width (w) is determined in a range of $1.0X_4$ to $1.5X_4$ when the ratio (A/B) is 1.2 or more, where the $X_4$ is calculated by Equation 6 below:

$$[Equation\ 6]$$

$$(Y_2-X_4)\cdot(Z_2-X_4)=Y_2\cdot Z_2\cdot 0.8$$

wherein, $Y_2$ is the horizontal length of the first negative electrode, and $Z_2$ is the vertical length of the first negative electrode.

14. The manufacturing method of an electrode assembly according to claim 9, comprising, before the deactivation step, a determination step determining whether deactivation of the first negative electrodes in the first mono cell and the half-cell is necessary based on the number of the first and second mono cells.

15. The manufacturing method of an electrode assembly according to claim 14, wherein it is determined in the determination step that when the number of the first and second mono cells is less than a predetermined value, the deactivation of the first negative electrodes in the first mono cell and the half-cell is necessary.

16. The manufacturing method of an electrode assembly according to claim 14, wherein it is determined in the determination step that when the number of the first and second mono cells is less than 15, the deactivation of the first negative electrodes in the first mono cell and the half-cell is necessary.

17. The manufacturing method of an electrode assembly according to claim 11, comprising, before the deactivation step, a determination step determining whether deactivation of the first negative electrodes in the first mono cell and the half-cell is necessary based on the ratio (A/B).

18. The manufacturing method of an electrode assembly according to claim 17, wherein it is determined in the determination step that when the ratio (A/B) is 1.1 or more, the deactivation of the first negative electrodes in the first mono cell and the half-cell is necessary.

19. An electrode assembly comprising:

a first mono cell obtained by sequentially laminating a separator, a first negative electrode on which a deactivation region having a predetermined width (w) is formed along an edge of one side, a separator, and a positive electrode;
a plurality of second mono cells laminated on the first mono cell and obtained by sequentially laminating a separator, a second negative electrode, a separator, and a positive electrode; and
a half-cell laminated on the second mono cell disposed at the uppermost end and obtained by sequentially laminating a separator, a first negative electrode on which a deactivation region is formed, and a separator, wherein
the deactivation region has a width (w) in a range of $0.9P_2$ to $1.2P_2$, where the $P_2$ is calculated by Equation 4 below:

$$[Equation\ 4]$$

$$P_2 = \frac{0.1a2b2}{(a2+b2)\times\log c2}$$

wherein, $a_2$ is the horizontal length of the first negative electrode, $b_2$ is the vertical length of the first negative electrode, and $c_2$ is the number of the first and second mono cells.

20. An electrode assembly comprising:

a first mono cell obtained by sequentially laminating a separator, a first negative electrode on which a deactivation region having a predetermined width (w) is formed along an edge of one side, a separator, and a positive electrode;
a plurality of second mono cells laminated on the first mono cell and obtained by sequentially laminating a separator, a second negative electrode, a separator, and a positive electrode; and

a half-cell laminated on the second mono cell disposed at the uppermost end and obtained by sequentially laminating a separator, a first negative electrode on which a deactivation region is formed, and a separator, wherein

when a ratio (A/B) of an area sum (A) of one sides of the plurality of negative electrodes to an area sum (B) of one sides of the plurality of positive electrodes in the electrode assembly is 1.1 or more to less than 1.2, the deactivation region has a width (w) in a range of $1.0X_3$ to $1.25X_3$, and

when a ratio (A/B) of an area sum (A) of one sides of the plurality of negative electrodes to an area sum (B) of one sides of the plurality of positive electrodes in the electrode assembly is 1.2 or more, the deactivation region has a width (w) in a range of $1.0X_4$ to $1.5X_4$, where

the $X_3$ and $X_4$ are calculated by Equations 5 and 6 below, respectively:

[Equation 5]

$$(Y_2-X_3) \cdot (Z_2-X_3) = Y_2 \cdot Z_2 \cdot 0.85$$

[Equation 6]

$$(Y_2-X_4) \cdot (Z_2-X_4) = Y_2 \cdot Z_2 \cdot 0.8$$

wherein, $Y_2$ is the horizontal length of the first negative electrode, and $Z_2$ is the vertical length of the first negative electrode.

[Figure 1]

[Figure 2]

[Figure 3]

(a)

<u>130</u>

104

101-4

102d

102c

101-3

(b)

<u>110(110-1)</u>

103b

103a

101-2

102b

102a

101-1

104

[Figure 4]

## INTERNATIONAL SEARCH REPORT

| | International application No. |
|---|---|
| | **PCT/KR2024/018391** |

| A. | CLASSIFICATION OF SUBJECT MATTER |
|---|---|
| | **H01M 10/0585**(2010.01)i; **H01M 4/04**(2006.01)i; **H01M 10/04**(2006.01)i; **H01M 10/42**(2006.01)i |

According to International Patent Classification (IPC) or to both national classification and IPC

| B. | FIELDS SEARCHED |
|---|---|

Minimum documentation searched (classification system followed by classification symbols)

H01M 10/0585(2010.01); H01M 10/04(2006.01); H01M 10/0525(2010.01); H01M 10/0562(2010.01); H01M 4/02(2006.01); H01M 50/46(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체 (electrode assembly), 음극 (negative electrode), 비활성화 (deactivation.passivation), 모노셀 (mono cell), 하프셀 (half cell)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2010-040489 A (SHARP CORP.) 18 February 2010 (2010-02-18)<br>See abstract; claim 1; paragraphs [0011] and [0022]; and figure 1. | 1-20 |
| A | JP 2014-146501 A (TOYOTA MOTOR CORP.) 14 August 2014 (2014-08-14)<br>See abstract; claim 1; and figures 1 and 2. | 1-20 |
| A | KR 10-2022-0127094 A (LG ENERGY SOLUTION, LTD.) 19 September 2022 (2022-09-19)<br>See claims 1-11. | 1-20 |
| A | US 2021-0305630 A1 (HONDA MOTOR CO., LTD.) 30 September 2021 (2021-09-30)<br>See abstract; claim 1; and figure 1. | 1-20 |
| A | KR 10-2022-0046821 A (LG ENERGY SOLUTION, LTD.) 15 April 2022 (2022-04-15)<br>See abstract; and claim 1. | 1-20 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 March 2025** | **06 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/018391**

| Patent document cited in search report | | | Publication date (day/month/year) | Patent family member(s) | | | Publication date (day/month/year) |
|---|---|---|---|---|---|---|---|
| JP | 2010-040489 | A | 18 February 2010 | JP | 4649502 | B2 | 09 March 2011 |
| | | | | WO | 2010-016432 | A1 | 11 February 2010 |
| JP | 2014-146501 | A | 14 August 2014 | None | | | |
| KR | 10-2022-0127094 | A | 19 September 2022 | US | 2022-0294082 | A1 | 15 September 2022 |
| US | 2021-0305630 | A1 | 30 September 2021 | CN | 112424975 | A | 26 February 2021 |
| | | | | JP | 7046185 | B2 | 01 April 2022 |
| | | | | WO | 2020-017467 | A1 | 23 January 2020 |
| KR | 10-2022-0046821 | A | 15 April 2022 | CN | 114651356 | A | 21 June 2022 |
| | | | | CN | 114651356 | B | 20 August 2024 |
| | | | | EP | 4044307 | A1 | 17 August 2022 |
| | | | | JP | 2023-501418 | A | 18 January 2023 |
| | | | | JP | 7493735 | B2 | 03 June 2024 |
| | | | | US | 2022-0376305 | A1 | 24 November 2022 |
| | | | | WO | 2022-075637 | A1 | 14 April 2022 |

Form PCT/ISA/210 (patent family annex) (July 2022)